# EUROPÄISCHE PATENTSCHRIFT

(11) **EP 2 429 751 B1**
(45) Veröffentlichungstag und Bekanntmachung des Hinweises auf die Patenterteilung: **14.01.2015**
(21) Anmeldenummer: 10720119.6
(22) Anmeldetag: 12.05.2010
(51) Int. Cl.: B23K 11/11, B23K 11/25

(54) **VERFAHREN UND VORRICHTUNG ZUM ERMITTELN DER SPANNUNG AN DEN ELEKTRODEN EINER PUNKTSCHWEIßZANGE**
METHOD AND DEVICE FOR DETERMINING THE VOLTAGE BETWEEN THE ELECTRODES OF A SPOT WELDING GUN
MÉTHODE ET DISPOSITIF DE DÉTERMINATION DE LA TENSION ENTRE LES ÉLECTRODE D'UNE PINCE DE SOUDAGE PAR POINT

(30) Priorität: 14.05.2009 AT 7472009
(43) Veröffentlichungstag der Anmeldung: 21.03.2012
(73) Patentinhaber: Fronius International GmbH, 4643 Pettenbach (AT)
(72) Erfinder: ENNSBRUNNER, Helmut, A-4060 Leonding (AT); GSCHMEIDLER, Thomas, A-4644 Scharnstein (AT)
(74) Vertreter: Sonn & Partner Patentanwälte
(86) Internationale Anmeldenummer: PCT/AT2010/000164
(87) Internationale Veröffentlichungsnummer: WO 2010/129982

(56) Entgegenhaltungen:
- EP-A2- 0 345 473
- DE-A1- 3 129 170
- US-A- 4 714 816

## Beschreibung

Die Erfindung betrifft ein Verfahren zum Ermitteln des zeitlichen Verlaufs der Spannung an den Elektroden einer Punktschweißzange während eines Punktschweißvorgangs als Indikator für die Schweißqualität, welche Elektroden an zueinander bewegbaren Zangenarmen befestigt sind, wobei über Messleitungen eine Messspannung gemessen wird, und mit einer Kompensationsspule eine induzierte Kompensationsspannung gemessen wird.

Die Erfindung betrifft auch eine Vorrichtung zum Ermitteln des zeitlichen Verlaufs der Spannung an den Elektroden einer Punktschweißzange während eines Punktschweißvorgangs als Indikator für die Schweißqualität, wobei die Elektroden an zueinander bewegbaren Zangenarmen befestigt sind, mit einer Einrichtung zur Messung einer Messspannung zwischen den Elektroden, welche Messeinrichtung mit entlang der Zangenarme verlaufenden Messleitungen verbunden ist, und mit einer Kompensationsspule zur Messung einer Kompensationsspannung zum Kompensieren von Messfehlern in den Messleitungen.

Bei Widerstandsschweißverfahren mit Hilfe von Punktschweißzangen werden zumindest zwei miteinander zu verschweißende Bauteile in Kontakt gebracht und durch Einprägen eines Schweißstroms über die Elektroden der Punktschweißzange die Bauteile aufgeschmolzen und dadurch eine Schweißverbindung geschaffen. Zur Qualitätskontrolle, aber auch zur Regelung des Schweißstromverlaufs, ist eine kontinuierliche Erfassung des Schweißstroms und der Elektrodenspannung während des Punktschweißvorgangs erforderlich.

Üblicherweise wird die qualitätsrelevante Elektrodenspannung, welche sich aus dem, sich zeitlich ändernden Ohm'schen Widerstand R(t) der Bauteile und dem Schweißstrom i(t) ergibt, über im Wesentlichen parallel zu den Zu- und Rückleitungen für den Schweißstrom geführten Messleitungen ermittelt. Durch eine solche Messanordnung wird eine Induktionsschleife durch die Zuleitungen und Messleitungen gebildet, in welcher durch die während des Punktschweißvorgangs herrschenden Magnetfelder Spannungen induziert werden, welche das Messergebnis verfälschen. Häufig sind die Änderungen im Magnetfeld so groß, dass die induzierte Spannung sogar größer als die zu messende Elektrodenspannung ist.

Zur Unterdrückung der Induktionsanteile im Messsignal werden oft analoge und digitale Filter verwendet. Nachteilig dabei ist, dass nicht nur der Induktionsanteil unterdrückt wird, sondern auch der zeitliche Verlauf der Elektrodenspannung R(t)*i(t) verfälscht wird.

Zur Kompensation der induzierten Spannungen werden Kompensationsspulen eingesetzt und dadurch Einflüsse von Magnetfeldern reduziert bzw. eliminiert. Beispielsweise wird bei der Punktschweißmaschine gemäß der DE 31 29 170 A1 eine Kompensationsspule mit der durch die Messleitungen und Schweißstromzuleitungen gebildeten Spule so zusammengeschaltet, dass Fehler durch induzierte Spannungen näherungsweise kompensiert werden können. Nachteilig dabei ist, dass Änderungen des magnetischen Flusses nicht korrigiert werden können. Derartige Änderungen im magnetischen Feld werden z.B. durch die Bewegung der Zange relativ zum Bauteil von Schweißpunkt zu Schweißpunkt verursacht oder durch Sättigungserscheinungen der Bauteilmaterialien, welche sich im Magnetfeld der Zange befinden, während der Schweißung erzeugt. Somit treten diese Änderungen praktisch immer auf, sodass die Fehler unregelmäßig sind.

Die US 4,714,816 A beschreibt eine Schweißvorrichtung zum Widerstandsschweißen mit Rollenelektroden, wobei eine Strommessung vorgenommen wird und der Schweißwiederstand ermittelt und eine Über- bzw. Unterschreitung von Grenzwerten erkannt wird.

Darüber hinaus werden die gemessenen Spannungen bei Messverfahren, deren Spannungsmessleitungen nicht im Bereich der Elektroden kontaktiert sind, durch die an den Zangenarmen und Zu- und Rückleitungen für den Schweißstrom herrschenden Temperaturen beeinflusst. Dies deshalb, weil die Temperatur den Widerstand der Zuleitung und somit den Spannungsabfall beeinflusst, sodass das Messergebnis verfälscht wird.

Die Aufgabe der vorliegenden Erfindung besteht in der Schaffung eines oben genannten Verfahrens und einer oben genannten Vorrichtung, mit denen der zeitliche Verlauf der Spannung an den Elektroden der Punktschweißzange während eines Punktschweißvorgangs möglichst genau ermittelt werden kann. Nachteile des Standes der Technik sollen verhindert oder zumindest reduziert werden.

Gelöst wird die erfindungsgemäße Aufgabe in verfahrensmäßiger Hinsicht dadurch, dass die Messspannung und die Kompensationsspannung getrennt voneinander erfasst und dass das Verhältnis zwischen der Messspannung und der Kompensationsspannung zu jenen Zeitpunkten, in welchen sprunghafte Spannungsänderungen auftreten, ermittelt wird, und die Kompensationsspannung mit dem ermittelten Verhältnis multipliziert und zur Ermittlung der Elektrodenspannung von der Messspannung subtrahiert wird. Im Gegensatz zum Stand der Technik erlaubt das gegenständliche Verfahren eine gesonderte Verarbeitung der Messspannung und der Kompensationsspannung, wodurch induzierte Spannungen unabhängig vom sich ändernden magnetischen Fluss kompensiert werden können und die Elektrodenspannung sehr genau ermittelt werden kann. Über die genau ermittelte Elektrodenspannung kann wiederum besser auf die Schweißqualität rückgeschlossen werden. Das gegenständliche Verfahren zeichnet sich dadurch aus, dass während des gesamten Punktschweißvorgangs die Messspannungen und die Kompensationsspannung ermittelt werden und dadurch eine permanente Korrektur von Messfehlern durch induzierte Spannungen ermöglicht wird. Da zu den Zeitpunkten, wo schnelle Spannungsänderungen in der Kompensationsspule auftreten, auch schnelle Spannungsänderungen im Messspannungssignal auftreten müssen, kann somit durch Vergleich der Messspannung und der Kompensationsspannung besonders gut auf die Größe der induzierten Spannung rückgeschlossen werden. Durch die Subtraktion der mit dem ermittelten Verhältnis multiplizierten Kompensationsspannung von der Messspannung kann die Elektrodenspannung ohne Verfälschung durch Filterung und durch sich ändernde magnetische Flüsse während der Schweißung und von Schweißpunkt zu Schweißpunkt sehr genau durch Beseitigung der induzierten Spannungen ermittelt werden.

Gemäß einem weiteren Merkmal der Erfindung ist vorgesehen, dass das Verhältnis zwischen der Messspannung und der Kompensationsspannung während des Punktschweißvorgangs laufend ermittelt wird, sodass eine exakte Messung gegeben ist.

Zusätzlich kann von der um die induzierten Spannungen korrigierten Messspannung der Spannungsabfall am Widerstand der Zuleitungen zur Ermittlung der Elektrodenspannung subtrahiert werden. Dadurch können weitere Einflussfaktoren eliminiert und die Elektrodenspannung noch genauer ermittelt werden.

Der Spannungsabfall am Widerstand der Zuleitungen kann über den Ohm'schen Widerstand der Zuleitungen während eines Punktschweißvorgangs ohne die zu verschweißenden Bauteilen ermittelt werden. Somit wird vor dem eigentlichen Punktschweißvorgang ein Punktschweißvorgang ohne zu verschweißende Bauteile durchgeführt und die von der induzierten Spannung bereinigte Messspannung durch den gemessenen Schweißstrom dividiert und dadurch der Ohm'sche Widerstand der Zuleitungen ermittelt. Somit kann eine exakte Korrektur des Zuleitungswiderstands am Zangenkörper, welcher sich in Abhängigkeit von der Temperatur ändert, durchgeführt werden.

Vorteilhafterweise werden die Messspannung und die Kompensationsspannung digitalisiert und einer Verarbeitungseinheit, insbesondere einem Mikroprozessor, zugeführt.

Vorteilhafterweise wird durch die Kompensationsspule zur Messung der Kompensationsspannung ein Teil der durch die Messleitungen zur Messung der Messspannung definierten Fläche abgedeckt. Dabei wird die Kompensationsspule in vorteilhafter Weise so angeordnet, dass die Zugänglichkeit zu den zu verschweißenden Bauteilen möglichst nicht beeinträchtigt wird. Dadurch wird auch gewährleistet, dass sich die induzierten Spannungen in der Messleitung und in der Kompensationsspule aufgrund von Fremdfeldern wie z.B. durch Schweißströme benachbarter Schweißzangen während des Punktschweißvorgangs nicht in ihrer Form unterscheiden und somit eine Kompensation des Induktionsanteils in der Messspannung stattfinden kann.

Insbesondere zu Zwecken der Qualitätskontrolle ist es von Vorteil, wenn die erfasste Messspannung und die Kompensationsspannung und/oder daraus abgeleitete Größen gespeichert werden.

Gelöst wird die erfindungsgemäße Aufgabe auch durch eine oben genannte Vorrichtung zum Ermitteln des zeitlichen Verlaufs der Spannung an den Elektroden einer Punktschweißzange, wobei die Einrichtung zur Messung der Messspannung und die Einrichtung zur Messung der Kompensationsspannung als separate Einheiten zur getrennten Erfassung ausgebildet sind und mit einer Einrichtung zur Verarbeitung der erfassten Messwerte verbunden sind, welche Verarbeitungseinrichtung zur Erfassung der Messspannung und der Kompensationsspannung und zur Ermittlung eines Verhältnisses zwischen der Messspannung und der Kompensationsspannung zu jenen Zeitpunkten, in welchen sprunghafte Spannungsänderungen auftreten, und zur Multiplikation der Kompensationsspannung mit dem ermittelten Verhältnis und Subtraktion der mit dem Verhältnis multiplizierten Kompensationsspannung von der Messspannung zur Ermittlung der Elektrodenspannung ausgebildet ist. Wie bereits oben erwähnt, kann durch die separate Erfassung und Verarbeitung der Messspannung und der Kompensationsspannung die Elektrodenspannung bei einem sich ändernden magnetischen Fluss durch die laufend aktualisierte exakte Kompensation der induzierten Spannung in der Messspannung möglichst genau ermittelt werden ohne mittels Filterung den zeitlichen Verlauf zu verfälschen. Von Vorteil ist auch, dass die Verarbeitungseinrichtung und die Messeinrichtungen in einer Messvorrichtung untergebracht sind, welche nahe der Schweißzange, z.B. am Zangenkörper, montiert ist. Somit kann die Einstreuung von Störungen minimiert werden. In vorteilhafter Weise werden dabei die Messdaten in der Verarbeitungseinrichtung aufbereitet und über ein Bussystem anderen Anlagenteilen zur Verfügung gestellt. Durch Vergleich der Messspannung und der Kompensationsspannung zu jenen Zeitpunkten, in welchen sprunghafte Spannungsänderungen auftreten, kann somit der Anteil an induzierten Spannungen in der Messspannung während der gesamten Schweißdauer eliminiert werden.

Vorteilhafterweise deckt die Kompensationsspule einen Teil der durch die Messleitungen definierten Fläche ab, ohne dass jedoch die Zugänglichkeit der zu verschweißenden Bauteile wesentlich beeinträchtigt wird.

Falls die Existenz von zeitlich veränderlichen Fremdmagnetfeldern ausgeschlossen werden kann, ist es auch möglich, die Kompensationsspule durch eine Rogowski-Spule zu bilden. Bei einer Rogowski-Spule handelt es sich um eine Luftspule ohne Eisenkern, wodurch nichtlineare Einflüsse des Eisenkerns entfallen können, welche um eine schweißstromführende Komponente der Zange angeordnet ist. Vorteilhafterweise kann die Rogowski-Spule gleichzeitig zur Ermittlung des Schweißstroms und zur Bestimmung der Induktionsspannung für die Kompensation verwendet werden, wodurch die Anlagenkosten gesenkt werden können.

Auch kann ein Speicher zum Speichern der erfassten Messspannung, der Kompensationsspannung und/oder daraus abgeleiteten Größen vorgesehen sein.

Schließlich werden gemäß einer vorteilhaften Variante der Vorrichtung die Messleitungen im Wesentlichen vor den Elektroden befestigt, wodurch der an den Elektroden auftretende Spannungsabfall unabhängig von Temperaturschwankungen ist. Üblicherweise sind die Elektroden wassergekühlt, wodurch sich die Temperatur dieses gekühlten Teils der Zuleitung nicht merklich ändert und somit der vorab bestimmte Zuleitungswiderstand im Betrieb korrekt berücksichtigt werden kann. Außerdem wird dadurch der Elektrodenwechsel, welcher laufend im Betrieb stattfindet, nicht negativ beeinflusst.

Die vorliegende Erfindung wird anhand der beigefügten Zeichnungen näher erläutert. Darin zeigen:
Fig. 1 ein schematisches Blockschaltbild einer Punktschweißzange mit einer Einrichtung zum Ermitteln des zeitlichen Verlaufs der Spannung an den Elektroden;
Fig. 2 die zeitlichen Verläufe des Schweißstroms, der Messspannung, der Kompensationsspannung und der daraus ermittelten Elektrodenspannung während eines Punktschweißvorgangs; und
Fig. 3 das Blockschaltbild einer möglichen Ausführungsvariante einer Vorrichtung zum Ermitteln des zeitlichen Verlaufs der Elektrodenspannung einer Punktschweißzange.

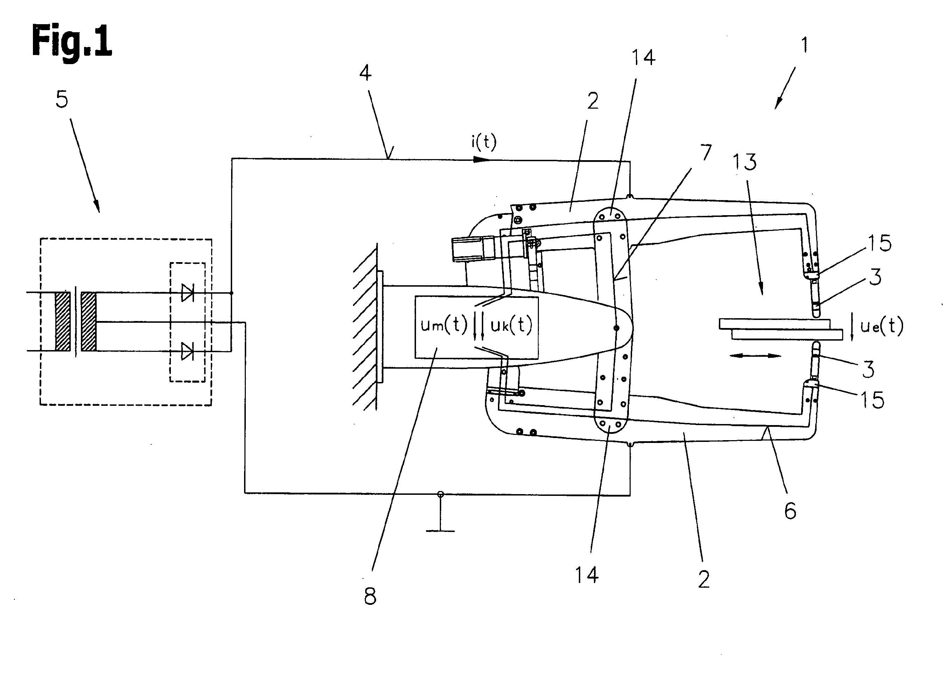

Fig. 1 zeigt schematisch eine Punktschweißzange 1 mit zueinander bewegbaren'Zangenarmen 2 und daran befestigten Elektroden 3. Über entsprechende Zuleitungen 4 sowie bevorzugt über die Zangenarme 2 wird der in einer Stromquelle 5 erzeugte Schweißstrom i(t) zu den Elektroden 3 geführt. Während eines Punktschweißvorgangs werden die zu verschweißenden Bauteile 13 durch die Elektroden 3 zusammengepresst und durch den Schweißstrom i(t) aufgeschmolzen, sodass eine Schweißverbindung entsteht. Zum Ermitteln des zeitlichen Verlaufs der Spannung uₑ(t) zwischen den Elektroden 3 der Punktschweißzange 1 während eines Punktschweißvorgangs wird eine Messspannung uₘ(t) über Messleitungen 6 gemessen. Die Messleitungen 6 werden bevorzugt entlang der gesamten Zangenarme 2 geführt und mit einer an der Punktschweißzange 1 angeordneten Messvorrichtung 8 verbunden. Dabei wird insbesondere durch den fließenden Schweißstrom i(t) eine Spannung uᵢ(t) in die Messleitungen 6 induziert und das Messergebnis verfälscht. Zusätzlich wird die induzierte Spannung uᵢ(t) durch das Bauteil 13 beeinflusst. Zur Kompensation dieser induzierten Spannung uᵢ(t), welche der Messspannung uₘ(t) überlagert ist, wird eine Kompensationsspule 7, vorzugsweise über einen Teil der durch die Messleitungen 6 und die Elektroden 3 gebildeten Spule zur Herstellung der magnetischen Kopplung der Spulen, angeordnet. In der Kompensationsspule 7 wird ausschließlich durch den im Punktschweißvorgang fließenden Schweißstrom i(t) eine Spannung induziert, welche als Kompensationsspannung uₖ(t) gemessen wird. Bevorzugt wird die Kompensationsspule 7 über einen Teil der Zangenarme 2 und den Schwenkarmen 14 geführt, sodass die Zugänglichkeit der Punktschweißzange 1 nicht beeinträchtigt wird. Wesentlich dabei ist, dass in der entsprechenden Messvorrichtung 8 die Messspannung uₘ(t) und die Kompensationsspannung uₖ(t) voneinander unabhängig erfasst und verarbeitet werden. Über die Kompensationsspannung uₖ(t) kann somit die in der Messspannung uₘ(t) induzierte Spannung uᵢ(t) ermittelt werden, sodass die Elektrodenspannung uₑ(t) exakt ermittelt werden kann.

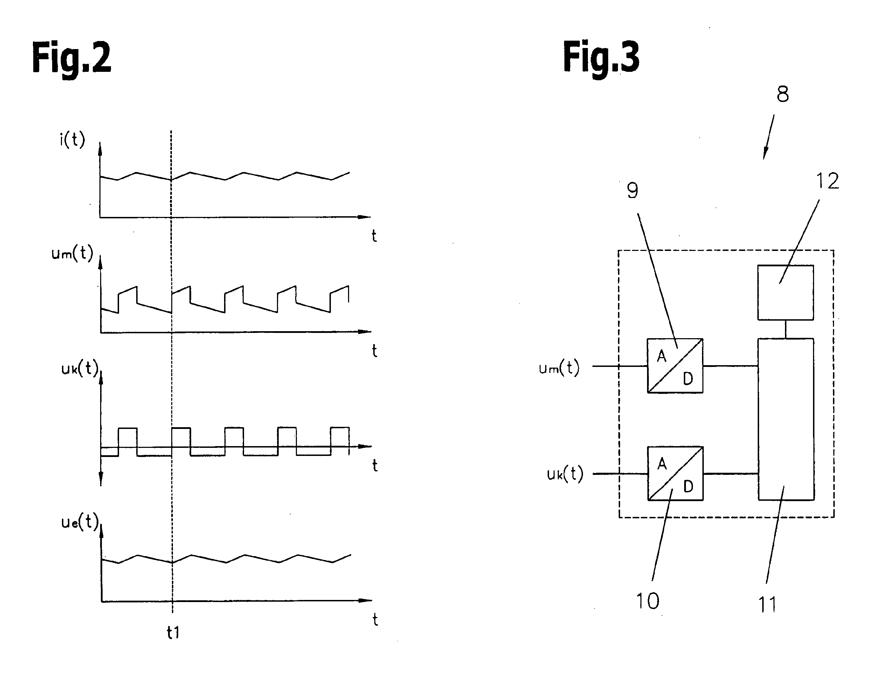

Fig. 2 zeigt anhand der Zeitverläufe des Schweißstroms i(t), der Messspannung uₘ(t) und der Kompensationsspannung uₖ(t) an einer Mittelfrequenz-Gleichstromanlage das erfindungsgemäße Verfahren zur Ermittlung des Zeitverlaufs der Elektrodenspannung uₑ(t) während eines Punktschweißvorgangs bei einer Mittelfrequenzanlage. Der Schweißstrom i(t) fließt von der Stromquelle 5 über die Zuleitungen 4 und den Zangenarmen 2 zu den Elektroden 3 in einen ohmsch-induktiven Kreis und ist aus diesem Grund nicht sprungfähig. Die Bereiche des Schweißstroms i(t) mit positiver und negativer Steigung werden durch entsprechende Ansteuerung des Schweißtrafos in der Stromquelle 5 erzeugt. In der Abbildung wurden anstelle der realen Verläufe in Form von e-Potenzen die positiven und negativen Steigungen des Schweißstroms i(t) durch Geraden angenähert. Weiters wurden die endlichen Steigungen der sprunghaften Signalanteile durch Senkrechte angenähert.

Die Messspannung uₘ(t) setzt sich additiv aus der induzierten Spannung uᵢ(t) und der Elektrodenspannung uₑ(t) zusammen. Die induzierte Spannung uᵢ(t) wird dabei durch das zu schweißende Bauteil 13 beeinflusst, da das Bauteil 13 in die durch die Messleitungen 6 gebildeten Spule bewegt wird und den magnetischen Fluss der Spule verändert. Hierzu sei angemerkt, dass die Lage des Bauteils 13 mit jeder Schweißverbindung verändert wird, wie durch den Pfeil in Fig. 1 angedeutet.

Im Gegensatz zur Messspannung uₘ(t) ist der Spannungsverlauf uₖ(t) an der Kompensationsspule 7 proportional der Ableitung des Schweißstroms i(t), da das Bauteil 13 keinen Einfluss auf den magnetischen Fluss in der Kompensationsspule 7 hat. Die sprunghaften Änderungen im Verlauf der Kompensationsspannung uₖ(t) und der Messspannung uₘ(t) entsprechen den Knickpunkten im Verlauf des Schweißstroms i(t).

Durch Vergleich der Messspannung uₘ(t) und der Kompensationsspannung uₖ(t) im Bereich der sprunghaften Spannungsänderungen, beispielsweise zum Zeitpunkt tl, kann die Messvorrichtung 8 ein Verhältnis v(t) basierend auf den Sprunghöhen der Spannungsänderungen ermitteln. Dieses Verhältnis v(t) ist erforderlich, um die ungleichen Flächen der Messspule und der Kompensationsspule 7 auszugleichen und um von der Kompensationsspannung uₖ(t) auf die induzierte Spannung uᵢ(t) rückschließen zu können. Wird nun die Kompensationsspannung uₖ(t) mit diesem ermittelten Verhältnis v(t) multipliziert und von der Messspannung uₘ(t) subtrahiert, erhält man im Wesentlichen exakt die Elektrodenspannung uₑ(t). Es ist also die induzierte Spannung uᵢ(t) von der Messspannung uₘ(t) entfernt worden. Von dieser Elektrodenspannung uₑ(t) muss zusätzlich auch noch ein Spannungsabfall u_{L}(t) aufgrund des Widerstands der Zuleitungen 4 subtrahiert werden. Dies ist erforderlich, da die Messleitungen 6 nicht an jene Stellen der Elektroden 3 geführt werden können, welche die Schweißverbindung herstellen. Entsprechend müssen die Elektroden 3 auch regelmäßig gewechselt werden. Aus diesem Grund werden die Messleitungen 6 im Wesentlichen an den so genannten Elektrodenaufnahmen 15 befestigt, welche jeweils eine Elektrode 3 aufnimmt. Das heißt, dass in diesem Fall auch der Spannungsabfall u_{L}(t) an den Elektroden 3 - welche einen Widerstand und auch die Zuleitung 4 darstellen - mit gemessen wird. Damit dieser Spannungsabfall u_{L}(t) nun subtrahiert werden kann, ist es erforderlich, den Wert des Ohm'schen Widerstands während eines Punktschweißvorgangs, jedoch ohne die zu verschweißenden Bauteile 13, zu ermitteln. Dazu wird im Wesentlichen ein Punktschweißvorgang durchgeführt, wobei sich die Elektroden 3 berühren, da keine Bauteile 13 vorhanden sind. Somit erhält man den Spannungsabfall u_{L}(t), indem von der gemessenen Spannung uₘ(t) die Kompensationsspannung uₖ(t) subtrahiert wird. Dieser Spannungsabfall u_{L}(t) ändert sich im Wesentlichen nicht mehr, da die Messleitungen 6 an den Elektrodenaufnahmen 15 - also vor wassergekühlten Elektroden 3 - befestigt sind. Dadurch wird die Temperatur der Elektroden 3 im Wesentlichen konstant gehalten, sodass dies keinen Einfluss auf den Spannungsabfall u_{L}(t) hat. Somit kann schlussendlich noch der in der Elektrodenspannung uₑ(t) enthaltene geringfügige Spannungsabfall u_{L}(t) subtrahiert werden und die Elektrodenspannung uₑ(t) exakt ermittelt ist. Dadurch kann anhand der Elektrodenspannung uₑ(t) die Qualität der Schweißverbindung sehr genau beurteilt werden.

Damit nun die Elektrodenspannung uₑ(t) laufend ermittelt werden kann, ist es erforderlich, das Verhältnis v(t) bei jeder sprunghaften Spannungsänderung zu aktualisieren bzw. neu zu ermitteln. Beispielsweise erfolgen die sprunghaften Spannungsänderungen mit einer Frequenz im Bereich bis 10 kHz, beispielsweise 2 kHz. Zwischen den sprunghaften Spannungsänderungen wird die Elektrodenspannung uₑ(t) mit dem bei der letzten sprunghaften Änderung ermittelten Verhältnis v(t) ermittelt. Demnach erfolgt im Wesentlichen zwischen den sprunghaften Spannungsänderungen eine Annäherung der Elektrodenspannung uₑ(t). Somit ist eine permanente Elimination der induzierten Spannungen uᵢ(t) in der Messspannung uₘ(t) gewährleistet. Durch Fremdmagnetfelder aus der Umgebung einer Punktschweißzange 1 wird das erfindungsgemäße Verfahren nicht beeinflusst, da dabei sowohl die Messspannung uₘ(t) als auch die Kompensationsspannung uₖ(t) in gleicher Weise verändert werden.

Fig. 3 zeigt schließlich ein Blockschaltbild einer möglichen Messvorrichtung 8 zum Ermitteln des zeitlichen Verlaufs der Spannung uₑ(t) an den Elektroden einer Punktschweißzange umfassend eine Einrichtung 9 zur Messung der Messspannung uₘ(t) und einer Einrichtung 10 zur Messung der Kompensationsspannung uₖ(t). Die beiden Messeinrichtungen 9, 10 sind vorzugsweise durch Analog-Digitalwandler gebildet. Somit werden die digitalisierten Werte der Messspannung uₘ(t) und Kompensationsspannung uₖ(t) einer Verarbeitungseinrichtung 11, insbesondere einem Mikroprozessor oder einem Field Programmable Gate Array (FPGA) zugeführt, wo entsprechend des erfindungsgemäßen Verfahrens eine Verarbeitung der Messsignale und eine Ermittlung der Elektrodenspannung uₑ(t) erfolgt. Zusätzlich kann die Verarbeitungseinrichtung 11 mit einem Speicher 12 zum Speichern der erfassten Messspannung uₘ(t) und der Kompensationsspannung uₖ(t) oder aus der Messspannung uₘ(t) und Kompensationsspannung uₖ(t) verarbeiteten Größen vorgesehen sein. Bevorzugt ist auch die Messvorrichtung 8 am Zangenkörper befestigt (Fig. 1) und über ein Bussystem mit weiteren Anlagenteilen der Punktschweißzange 1 verbunden. Somit erfolgt die Digitalisierung der analogen Spannungen direkt am Zangenkörper in der Messvorrichtung 8. Zur Verbesserung der Qualitätssicherung wird bevorzugt ein echtzeitfähiges Bussystem eingesetzt.

## Patentansprüche

1. Verfahren zum Ermitteln des zeitlichen Verlaufs der Spannung (uₑ(t)) an den Elektroden (3) einer Punktschweißzange (1) während eines Punktschweißvorgangs als Indikator für die Schweißqualität, welche Elektroden (3) an zueinander bewegbaren Zangenarmen (2) befestigt sind, wobei über Messleitungen (6) eine Messspannung (uₘ(t)) gemessen wird, und mit einer Kompensationsspule (7) eine induzierte Kompensationsspannung (uₖ(t)) gemessen wird, **dadurch gekennzeichnet, dass** die Messspannung (uₘ(t)) und die Kompensationsspannung (uₖ(t)) getrennt voneinander erfasst werden und dass das Verhältnis (v(t)) zwischen der Messspannung (uₘ(t)) und der Kompensationsspannung (uₖ(t)) zu jenen Zeitpunkten, in welchen sprunghafte Spannungsänderungen auftreten, ermittelt wird, und die Kompensationsspannung (uₖ(t)) mit dem ermittelten Verhältnis (v(t)) multipliziert und zur Ermittlung der Elektrodenspannung (uₑ(t)) von der Messspannung (uₘ(t)) subtrahiert wird.

2. Verfahren nach Anspruch 1, **dadurch gekennzeichnet, dass** das Verhältnis (v(t)) während des Punktschweißvorgangs laufend bestimmt wird.

3. Verfahren nach Anspruch 1 oder 2, **dadurch gekennzeichnet, dass** von der um die induzierten Spannungen (uᵢ(t)) korrigierten Messspannung (uₘ(t)) der Spannungsabfall (u_{L}(t)) am Widerstand der Zuleitungen (4) zur Ermittlung der Elektrodenspannung (uₑ(t)) subtrahiert wird.

4. Verfahren nach Anspruch 3, **dadurch gekennzeichnet, dass** der Ohm'sche Widerstand der Zuleitungen (4) für die Ermittlung des Spannungsabfalls (u_{L}(t)) während eines Punktschweißvorgangs vorweg ohne die zu verschweißenden Bauteilen (13) ermittelt wird.

5. Verfahren nach einem der Ansprüche 1 bis 4, **dadurch gekennzeichnet, dass** die Messspannung (uₘ(t)) und die Kompensationsspannung (uₖ(t)) digitalisiert und einer Verarbeitungseinrichtung (11) zugeführt werden.

6. Verfahren nach einem der Ansprüche 1 bis 5, **dadurch gekennzeichnet, dass** durch die Kompensationsspule (7) ein Teil der durch die Messleitungen (6) definierten Fläche abgedeckt wird.

7. Verfahren nach einem der Ansprüche 1 bis 6, **dadurch gekennzeichnet, dass** die erfasste Messspannung (uₘ(t)) und die Kompensationsspannung (uₖ(t)) und/oder daraus abgeleitete Größen gespeichert werden.

8. Vorrichtung zum Ermitteln des zeitlichen Verlaufs der Spannung (uₑ(t)) an den Elektroden (3) einer Punktschweißzange (1) während eines Punktschweißvorgangs als Indikator für die Schweißqualität, wobei die Elektroden (3) an zueinander bewegbaren Zangenarmen (2) befestigt sind, mit einer Einrichtung (9) zur Messung einer Messspannung (uₘ(t)) zwischen den Elektroden (3), welche Messeinrichtung (9) mit entlang der Zangenarme (2) verlaufenden Messleitungen (6) verbunden ist, und mit einer Kompensationsspule (7) zur Messung einer Kompensationsspannung (uₖ(t)) zum Kompensieren von Messfehlern in den Messleitungen (6), **dadurch gekennzeichnet, dass** die Einrichtung (9) zur Messung der Messspannung (uₘ(t)) und die Einrichtung (10) zur Messung der Kompensationsspannung (uₖ(t)) als separate Einheiten zur getrennten Erfassung ausgebildet sind und mit einer Einrichtung (11) zur Verarbeitung der erfassten Messwerte verbunden sind, welche Verarbeitungseinrichtung (11) zur Erfassung der Messspannung (uₘ(t)) und der Kompensationsspannung (uₖ(t)) und zur Ermittlung eines Verhältnisses (v(t)) zwischen der Messspannung (uₘ(t)) und der Kompensationsspannung (uₖ(t)) zu jenen Zeitpunkten, in welchen sprunghafte Spannungsänderungen auftreten, und zur Multiplikation der Kompensationsspannung (uₖ(t)) mit dem ermittelten Verhältnis (v(t)) und Subtraktion der mit dem Verhältnis (v(t)) multiplizierten Kompensationsspannung (uₖ(t)) von der Messspannung (uₘ(t)) zur Ermittlung der Elektrodenspannung (uₑ(t)) ausgebildet ist.

9. Vorrichtung nach Anspruch 8, **dadurch gekennzeichnet, dass** die Kompensationsspule (7) einen Teil der durch die Messleitungen (6) definierten Fläche abdeckt.

10. Vorrichtung nach Anspruch 8 oder 9, **dadurch gekennzeichnet, dass** die Kompensationsspule (7) durch eine Rogowski-Spule gebildet ist.

11. Vorrichtung nach einem der Ansprüche 8 bis 10, **dadurch gekennzeichnet, dass** ein Speicher (12) zum Speichern der erfassten Messspannung (uₘ(t)), der Kompensationsspannung (uₖ(t)) und/oder daraus abgeleiteten Größen vorgesehen ist.

12. Vorrichtung nach einem der Ansprüche 8 bis 11, **dadurch gekennzeichnet, dass** die Messleitungen (6) im Wesentlichen vor den Elektroden (3) befestigt sind.

## Claims

1. Method for determining the temporal curve of the voltage (uₑ(t)) at the electrodes (3) of a spot welding gun (1) during a spot welding process as an indicator for the welding quality, wherein the electrodes (3) are fastened to gun arms (2) that can be moved relative to each other, wherein a measuring voltage (uₘ(t)) is measured via measuring leads (6) and an induced compensating voltage (uₖ(t)) is measured using a compensating coil (7), **characterized in that** the measuring voltage (uₘ(t)) and the compensating voltage (uₖ(t)) are detected separately and the relation (v(t)) between measuring voltage (uₘ(t)) and compensating voltage (uₖ(t)) is determined at those times, when erratic voltage changes occur, and the compensating voltage (uₖ(t)) is multiplied by the determined relation (v(t)) and subtracted from the measuring voltage (uₘ(t)) to determine the electrode voltage (uₑ (t)).

2. Method according to claim 1, **characterized in that** the relation (v(t)) is continuously determined during the spot welding process.

3. Method according to claim 1 or 2, **characterized in that** the voltage drop (u_{L}(t)) at the resistance of feed lines (4) is subtracted from the measuring voltage (uₘ(t)) adjusted by the induced voltages (uᵢ(t)) for determining the electrode voltage (uₑ(t)).

4. Method according to claim 3, **characterized in that** the ohmic resistance of feed lines (4) for determining the voltage drop (u_{L}(t)) during a spot welding process is previously determined without the components (13) to be welded.

5. Method according to one of claims 1 to 4, **characterized in that** the measuring voltage (uₘ(t)) and the compensating voltage (uₖ(t)) are digitalized and are supplied to a processing device (11).

6. Method according to one of claims 1 to 5, **characterized in that** a part of the area defined by the measuring leads (6) is covered by compensating coil (7).

7. Method according to one of claims 1 to 6, **characterized in that** the detected measuring voltage (uₘ(t)) and the compensating voltage (uₖ(t)) and/or magnitudes derived therefrom are stored.

8. Apparatus for determining the temporal curve of the voltage (uₑ(t)) at the electrodes (3) of a spot welding gun (1) during a spot welding process as an indicator for the welding quality, wherein the electrodes (3) are fastened to gun arms (2) that can be moved relative to each other, comprising a device (9) for measuring a measuring voltage (uₘ(t)) between the electrodes (3), said measuring device (9) being connected to measuring leads (6) extending along the gun arms (2), and further comprising a compensating coil (7) for measuring a compensating voltage (uₖ(t)) for compensating measuring errors in the measuring leads (6), charaterized in that the device (9) for measuring the measuring voltage (uₘ(t)) and the device (10) for measuring the compensating voltage (uₖ(t)) are designed as separate units for separate detection and connected to a device (11) for processing the detected values, said processing device (11) being designed for detecting the measuring voltage (uₘ(t)) and the compensating voltage (uₖ(t)) and for determining a relation (v(t)) between the measuring voltage (uₘ(t)) and the compensating voltage (uₖ(t)) at those times, when erratic voltage changes occur, and for multiplication of compensating voltage (uₖ(t)) by the determined relation (v)t)) and subtraction of the compensating voltage (uₖ(t)) multiplied by relation (v(t)) from the measuring voltage (uₘ(t)) to determine the electrode voltage (uₑ(t)).

9. Apparatus according to claim 8, **characterized in that** the compensating coil (7) covers a part of the area defined by the measuring leads (6).

10. Apparatus according to claim 8 or 9, **characterized in that** the compensating coil (7) is formed by a Rogowski coil.

11. Apparatus according to one of claims 8 to 10, **characterized in that** a memory (12) for storing the detected measuring voltage (uₘ(t)), the compensating voltage (uₖ(t)) and/or magnitudes derived therefrom is provided.

12. Apparatus according to one of claims 8 to 11, **characterized in that** the measuring leads (6) are significantly fastened in front of the electrodes (3).

## Revendications

1. Procédé de détermination du tracé en fonction du temps de la tension (uₑ(t)) au niveau des électrodes (3) d'une pince de soudure par points (1) pendant un processus de soudure par points en tant qu'indicateur de la qualité de soudure, ces électrodes (3) étant fixées à des bras de pince (2) mobiles l'un par rapport à l'autre, une tension de mesure (uₘ(t)) étant mesurée par l'intermédiaire de lignes de mesure (6), et avec une bobine de compensation (7), une tension de compensation (uₖ(t)) induite est mesurée, **caractérisé en ce que** la tension de mesure (uₘ(t)) et la tension de compensation (uₖ(t)) sont mesurées séparément l'une de l'autre et **en ce que** le rapport (v(t)) entre la tension de mesure (uₘ(t)) et la tension de compensation (uₖ(t)) est déterminé aux moments où des variations de tension brusques surviennent, et la tension de compensation (uₖ(t)) est multipliée par le rapport (v(t)) déterminé et, pour la détermination de la tension au niveau des électrodes (uₑ(t)) est soustraite de la tension de mesure (uₘ(t)).

2. Procédé selon la revendication 1, **caractérisé en ce que** le rapport (v(t)) est déterminé pendant le processus de soudure par points.

3. Procédé selon la revendication 1 ou 2, **caractérisé en ce que**, de la tension de mesure (uₘ(t)) corrigée des tensions induites (uᵢ(t)), la chute de tension (u_{L}(t)) au niveau de la résistance des lignes d'alimentation (4) est soustraite pour la détermination de la tension au niveau des électrodes (uₑ(t)).

4. Procédé selon la revendication 3, **caractérisé en ce que** la résistance ohmique des lignes d'alimentation (4) est déterminée pour la détermination de la chute de tension (u_{L}(t)) pendant le processus de soudure par points au préalable sans les composants à souder (13).

5. Procédé selon l'une des revendications 1 à 4, **caractérisé en ce que** la tension de mesure (uₘ(t)) et la tension de compensation (uₖ(t)) sont numérisées et entrées dans un dispositif de traitement (11).

6. Procédé selon l'une des revendications 1 à 5, **caractérisé en ce que**, grâce à la bobine de compensation (7), une partie de la surface définie par les lignes de mesure (6) est couverte.

7. Procédé selon l'une des revendications 1 à 6, **caractérisé en ce que** la tension de mesure (uₘ(t)) relevée et la tension de compensation (uₖ(t)) et/ou les valeurs dérivées de celles-ci sont enregistrées.

8. Dispositif de détermination du tracé en fonction du temps de la tension (uₑ(t)) au niveau des électrodes (3) d'une pince de soudure par points (1) pendant un processus de soudure par points en tant qu'indicateur de la qualité de soudure, ces électrodes (3) étant fixées à des bras de pince (2) mobiles l'un par rapport à l'autre, avec un dispositif (9) pour la mesure d'une tension de mesure (uₘ(t)) entre les électrodes (3), ce dispositif de mesure (9) étant relié à des lignes de mesure (6) qui s'étendent le long des bras de la pince (2), et avec une bobine de compensation (7) pour la mesure d'une tension de compensation (uₖ(t)) pour la compensation d'erreurs de mesure dans le lignes de mesure (6), **caractérisé en ce que** le dispositif (9) de mesure de la tension de mesure (uₘ(t)) et le dispositif (10) de mesure de la tension de compensation (uₖ(t)) sont conçues comme des unités séparées pour une mesure séparée, et sont reliés avec un dispositif (11) pour le traitement des valeurs mesurées, ce dispositif de traitement (11) étant conçu pour la mesure de la tension de mesure (uₘ(t)) et de la tension de compensation (uₖ(t)) et pour la détermination d'un rapport (v(t)) entre la tension de mesure (uₘ(t)) et la tension de compensation (uₖ(t)) aux moments où des variations brusques de tension surviennent, et pour la multiplication de la tension de compensation (uₖ(t)) par un rapport (v(t)) déterminé et la soustraction de la tension de mesure (uₘ(t)) de la tension de compensation (uₖ(t)) multipliée par le rapport (v(t)) pour la détermination de la tension au niveau des électrodes (uₑ(t)).

9. Dispositif selon la revendication 8, **caractérisé en ce que** la bobine de compensation (7) couvre une partie de la surface définie par les lignes de mesure (6).

10. Dispositif selon la revendication 8 ou 9, **caractérisé en ce que** la bobine de compensation (7) est constituée d'une bobine de Rogowski.

11. Dispositif selon l'une des revendications 8 à 10, **caractérisé en ce qu'**il est prévu une mémoire (12) pour l'enregistrement de la tension de mesure (uₘ(t)) mesurée, de la tension de compensation (uₖ(t)) et/ou des valeurs qui sont dérivées de celles-ci.

12. Dispositif selon l'une des revendications 8 à 11, **caractérisé en ce que** les lignes de mesure (6) sont sensiblement fixées devant les électrodes (3).
